# EUROPEAN PATENT APPLICATION

(11) **EP 4 534 465 A1**
(43) Date of publication of application: **09.04.2025**
(21) Application number: 24204134.1
(22) Date of filing: 02.10.2024
(51) Int. Cl.: B66B 5/00

(54) **ASSISTED CONVEYANCE SYSTEM PROBLEM RESOLUTION**

(30) Priority: 04.10.2023 US 202318480735
(71) Applicant: Otis Elevator Company, Farmington CT 06032 (US)
(72) Inventor: Rudramurthy, Gamini N V, 500081 Hyderabad, Telangana (IN); Pradeep, Miriyala, 500081 Hyderabad, Telangana (IN)
(74) Representative: Schmitt-Nilson Schraud Waibel Wohlfrom Patentanwälte Partnerschaft mbB

(57) **Abstract**

A method of providing assisted problem resolution of a conveyance system, the method including receiving, at a predictive system, a problem description of a problem at the conveyance system and current configuration parameters of the conveyance system; at the predictive system, determining at least one set of updated configuration parameters to address the problem; and sending, from the predictive system to a user device, a response including the at least one set of updated configuration parameters.

## Description

The embodiments disclosed herein relate generally to conveyance system problem resolution, and more particularly to assisted conveyance system problem resolution.

Conveyance systems, for example an elevator system, may need problem resolution when the conveyance system is not operating correctly. A mechanic will need to analyze conveyance system related problems reported at the field. This is often coupled with experience and subject matter experts to provide guidance for updating the configuration parameters of the conveyance system. This "in-depth" analysis might take several days and multiple site visits to test different configuration parameters in the field. Further, sometimes proven elevator configuration parameter(s) may not be known to the mechanic when they are at the site of the conveyance system.

According to an embodiment, a method of providing assisted problem resolution of a conveyance system includes receiving, at a predictive system, a problem description of a problem at the conveyance system and current configuration parameters of the conveyance system; at the predictive system, determining at least one set of updated configuration parameters to address the problem; and sending, from the predictive system to a user device, a response including the at least one set of updated configuration parameters.

Particular embodiments further may include at least one, or a plurality of, the following optional features, alone or in combination with each other:

In addition to one or more of the features described herein, or as an alternative, further embodiments may include training the predictive system using one or more of engineering specifications, service records and customer complaints.

In addition to one or more of the features described herein, or as an alternative, further embodiments may include wherein the response includes an impact analysis of the at least one set of updated configuration parameters on the conveyance system.

In addition to one or more of the features described herein, or as an alternative, further embodiments may include wherein the response includes one or more reasons for the problem.

In addition to one or more of the features described herein, or as an alternative, further embodiments may include operating the conveyance system in a trial run using the at least one set of updated configuration parameters.

In addition to one or more of the features described herein, or as an alternative, further embodiments may include saving the at least one set of updated configuration parameters when the trial run indicates successful resolution of the problem.

In addition to one or more of the features described herein, or as an alternative, further embodiments may include providing feedback to the predictive system after the trial run.

in addition to one or more of the features described herein, or as an alternative, further embodiments may include the predictive system performing adaptive learning based on the feedback.

In addition to one or more of the features described herein, or as an alternative, further embodiments may include the at least one set of updated configuration parameters includes a plurality of sets of updated configuration parameters, the method further comprising: selecting one of the plurality of sets of updated configuration parameters as a selected set of updated configuration parameters; operating the conveyance system in a trial run using the selected set of updated configuration parameters; and saving the selected set of updated configuration parameters when the trial run indicates successful resolution of the problem.

In addition to one or more of the features described herein, or as an alternative, further embodiments may include wherein the conveyance system is one of an elevator, escalator and moving walkway.

According to another embodiment, a system for providing assisted problem resolution of a conveyance system includes a predictive system in communication with a user device over a network, the predictive system configured to perform operations including: receiving, at the predictive system, a problem description of a problem at the conveyance system and current configuration parameters of the conveyance system; at the predictive system, determining at least one set of updated configuration parameters to address the problem; and sending, from the predictive system to a user device, a response including the at least one set of updated configuration parameters.

Particular embodiments further may include at least one, or a plurality of, the following optional features, alone or in combination with each other:

In addition to one or more of the features described herein, or as an alternative, further embodiments may include wherein the operations further include training the predictive system using one or more of engineering specifications, service records and customer complaints.

In addition to one or more of the features described herein, or as an alternative, further embodiments may include wherein the response includes an impact analysis of the at least one set of updated configuration parameters on the conveyance system.

In addition to one or more of the features described herein, or as an alternative, further embodiments may include wherein the response includes one or more reasons for the problem.

In addition to one or more of the features described herein, or as an alternative, further embodiments may include wherein the conveyance system is operated in a trial run using the at least one set of updated configuration parameters.

In addition to one or more of the features described herein, or as an alternative, further embodiments may include wherein the operations further include receiving, at the predictive system, feedback after the trial run.

In addition to one or more of the features described herein, or as an alternative, further embodiments may include wherein the operations further include the predictive system performing adaptive learning based on the feedback.

In addition to one or more of the features described herein, or as an alternative, further embodiments may include wherein the conveyance system is one of an elevator, escalator and moving walkway.

According to another embodiment a computer program product is embodied on a non-transitory computer-readable storage medium, the computer program product including instructions for causing a processor to implement a process of providing assisted problem resolution of a conveyance system, the process comprising: receiving, at the predictive system, a problem description of a problem at the conveyance system and current configuration parameters of the conveyance system; at the predictive system, determining at least one set of updated configuration parameters to address the problem; and sending, from the predictive system to a user device, a response including the at least one set of updated configuration parameters.

Particular embodiments further may include at least one, or a plurality of, the above optional features, alone or in combination with each other.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.
BThe present disclosure is illustrated by way of example and not limited in the accompanying figures in which like reference numerals indicate similar elements.
FIG. 1 is a schematic illustration of a conveyance system that may employ various embodiments of the present disclosure.
FIG. 2 depicts a system for providing assisted conveyance system problem resolution in an example embodiment.
FIG. 3 depicts a method of providing assisted conveyance system problem resolution an example embodiment.
FIG. 4 illustrates a computing system in an example embodiment.

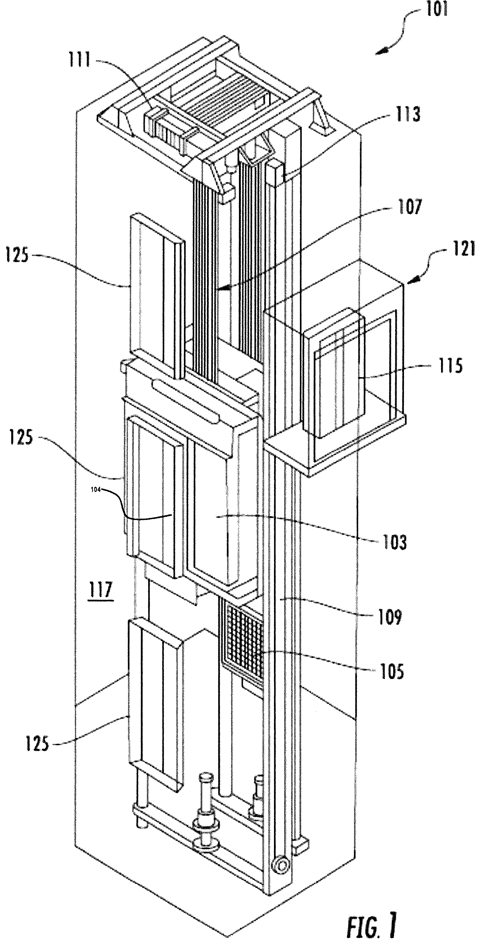

FIG. 1 is a perspective view of a conveyance system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft or hoistway 117 and along the guide rail 109.

The tension member 107 engages the machine 111, which is part of an overhead structure of the conveyance system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the conveyance system 101, and particularly the elevator car 103. It is to be appreciated that the controller 115 need not be in the controller room 121 but may be in the hoistway or other location in the conveyance system 101. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the conveyance system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

The conveyance system 101 also includes one or more elevator doors 104. The elevator door 104 may be attached to the elevator car 103 or the elevator door 104 may be located on a landing 125 of the elevator system 101, or both. Embodiments disclosed herein may be applicable to both an elevator door 104 attached to the elevator car 103 or an elevator door 104 located on a landing 125 of the elevator system 101, or both. The elevator door 104 opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless conveyance systems using a hydraulic lift to impart motion to an elevator car. Embodiments may also be employed in ropeless conveyance systems using self-propelled elevator cars (e.g., elevator cars equipped with friction wheels, pinch wheels or traction wheels). FIG. 1 is merely a non-limiting example presented for illustrative and explanatory purposes.

In other embodiments, the conveyance system comprises a conveyance system that moves passengers between floors and/or along a single floor. Such conveyance systems may include escalators, people movers, moving walkways, etc. Accordingly, embodiments described herein are not limited to elevator conveyance systems, such as that shown in Figure 1.

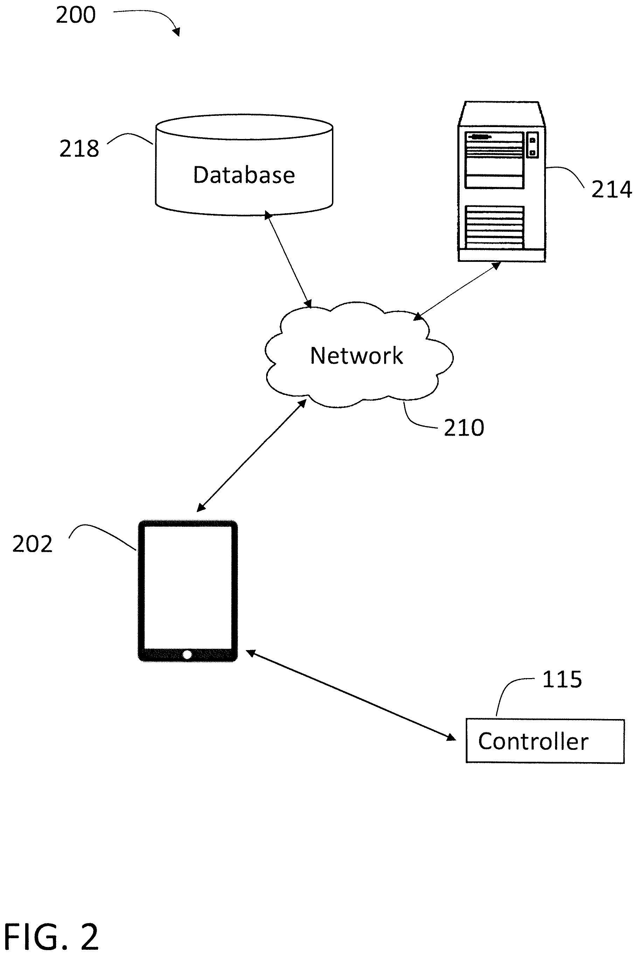

FIG. 2 depicts a system 200 for providing assisted conveyance system problem resolution in an example embodiment. The system includes a user device 202 which will be operated by a user, such as maintenance personnel. The user device 202 may be a mobile smart device having a processor, memory, display, etc., such as a phone, tablet, laptop computer, etc. The user device 202 may also be implemented using a stationary device, such as a personal computer, server, remote terminal, etc.

The user device 202 is used during problem resolution of the conveyance system 101. During problem resolution, the user device 202 communicates with the controller 115. The user device 202 may communicate with the controller 115 over a wired and/or wireless connection (e.g., WiFi, Bluetooh, NFC, LAN, CAN Bus, cellular, satellite, Internet, etc.). The user device 202 can access configuration parameters, maintenance records, faults, errors, alerts, etc., stored on the controller 115.

The user device 202 is also in communication with a predictive system 214 over a network 210. The network 210 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, WiFi, Fixed Wireless Data, 2G, 2.5G, 3G (e.g., WCDMA/UMTS based 3G networks), 4G, IMT-Advanced, pre-4G, 5G, LTE Advanced, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

In some embodiments, the user device 202 executes an application supported by the predictive system 214. In these embodiments, the user can connect to the predictive system 214 using the application installed on the user device. In other embodiments, the predictive system 214 is accessed using a generic interface, such as a web browser.

The predictive system 214 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device.

The predictive system 214 may be implemented using models of the conveyance system 101 based on training using engineering specifications, service records, customer complaints, present and past controller parameter set(s), operating conditions (data collected from sensors), usage patterns and maintenance history. The predictive system 214 may be implemented using an artificial intelligence (AI) system, such as a large language model (LLM). As an LLM, the predictive system 214 can receive queries in natural language and provide outputs in natural language. The predictive system 214 may employ deep learning techniques for initial training and adaptive learning as the conveyance operates over time.

A database 218 is in communication with the predictive system 214 and the user device 202 via the network 210. The database 218 may be implemented using known memory devices such as random access memory (RAM), read-only memory (ROM), flash memory, hard disk drive (HDD), solid-state drive (SSD), etc. The database 218 may be implemented using a variety of techniques, including a memory device in the predictive system 214, a memory device remote from the predictive system 214, cloud storage, etc.

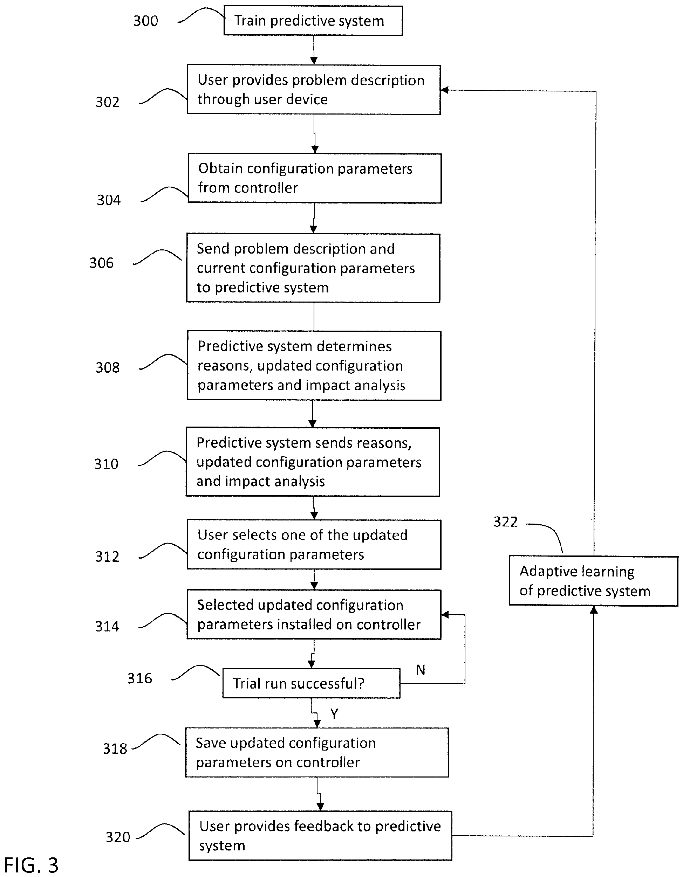

FIG. 3 depicts a method of providing assisted conveyance system problem resolution in an example embodiment. The process begins at 300 where the predictive system 214 is trained. The predictive system 214 may be trained using a knowledgebase of the conveyance system 101, including one or more of engineering specifications, service records, customer complaints, etc. The predictive system 214 may also collect various data points from the controller 115, including data from elevator sensors, including but not limited to speed, temperature, door movement, load capacity, and energy consumption. Additionally, data from usage patterns, such as peak usage hours and maintenance history, may be considered. The training may be performed using machine learning algorithms to recognize patterns.

The machine learning training process may include data pre-processing which converts a raw data form to a numerical form that is suitable for machine learning process. This may include one or more of tokenization of natural language text derived from engineering specifications, service records, customer complaints; present and past controller parameter set(s) as a numerical vector(s); operating conditions (data collected from sensors) to a numerical vector and usage patterns and maintenance history data as a numerical vector.

The machine learning training process may include data training and validation data preparation which splits overall available dataset into two datasets (training, validation). The usual split ratio followed is anywhere from (60% training, 40% validation) to (85% training, 15% validation). The validation data becomes a data point that model will never see during training. The training data is the data on which model gets trained continually.

The machine learning training process may include a training process. For machine learning models such as linear regression, logistic regression, decision trees, support vector machines, Xg-boost etc., the training process may include (i) elimination of unimportant features (or data points) from overall features (all numerical vectors). This is usually done using statistical methods such as correlation functions, information gain, regularization, etc. and (ii) training based on selected important features. For neural network models (also known as deep learning) architectures, feature elimination is usually not required. Training of these models may include identifying different layers and layer sizes and defining objective function based on goal.

Embodiments of the machine learning model may provide positive or negative impact from selected parameters. This can be accomplished using a binary classification models such as logistic regression, decision tree, neural networks, etc. Embodiments of the machine learning model may provide impact analysis explanatory text. This text is generated using a model (or same model as in above) which can generate text from analysis. These models follow a different architecture used for knowledge aware systems such as LLM models. Some practical examples are Open AI ChatGPT, Bing Chat, Meta LLAMA2, Google Bard. These models usually follow transformer architecture to generate text output based on information provided as input.

Various models can be utilized, such as neural networks, decision trees, or support vector machines, to optimize accuracy and efficiency. The predictive system 214 may utilize multi-language models in order to support multiple spoken languages, sign language, etc.

The predictive system 214 may be trained using data specific to the type of conveyance system 101. For example, the predictive system 214 may be trained based on the type of machine 111, whether the elevator system 101 uses ropes or is ropeless, the number of floors, the model numbers of components (e.g., the drive 111, the controller 115, etc.), the installation type, etc. In this way, the predictive system 214 is trained using data relevant to the specific conveyance system 101.

At 302, the user provides a problem description through the user device 202. The user may speak to provide a verbal problem description which is received by a microphone of the user device 202. The problem description may be entered in other manners through the user device 202, such as a textual description, drop down menus, etc. The user may use a search query entered through the user device 202 to locate a problem description.

At 304, the user device obtains the current configuration parameters for the conveyance system 101 from the controller 115. The current configuration parameters may include a wide variety of controllable parameters of the elevator system 101, such as, but not limited to, elevator car speed limits, elevator car acceleration limits, door dwell times, lighting intensity, car load limits, etc. Other example configuration parameters include door reversals, door time close protection, door time monitoring, double door operation, earthquake automatic recovery, emergency hospital service operation and emergency power operation. Other examples of configuration parameters include (i) a velocity profile configuration that controls velocity profile of elevator (full speed, reduced speed etc.,), (ii) cancel hall call mode, in which the elevator may start ignoring hall calls while accepting only car calls, (iii) disable doors at specific landings and (iv) door hold button time and timeout durations, which control an amount of time door may be kept open by passenger forcibly.

Each of these configuration parameters may be controlled by a subset of relevant parameters for the feature. For example, configuration parameter reopen door time is a subset of door reversals, and controls dwell time of a door in case of reopening. In another example, configuration parameter emergency power group delay time is a subset of emergency power operation, and controls delay time in case of an emergency power operation.

At 306, the problem description and the current configuration parameters are sent to the predictive system 214.

At 308, the predictive system 214 uses the problem description and current configuration parameters to determine one or more sets of updated configuration parameters to address the problem. The predictive system 214 may perform an impact analysis for each set of the updated configuration parameters. Impact analysis refers what change(s) the updated configuration parameters will have on the conveyance system 101.

At 310, the predictive system 214 replies to the user device 202 by sending a response to the user device 202. The response includes one or more reasons for the problem and/or one or more sets of updated configuration parameters corresponding to each reason for the problem. The predictive system 214 may also send the user device 202 the impact analysis for each set of updated configuration parameters, if performed. The one or more sets of updated configuration parameters may be prioritized by the predictive system 214, so that a set of updated configuration parameters more likely to solve the problem is presented with a higher priority than a set of updated configuration parameters less likely to solve the problem.

At 312, the user, through the user device 202, selects one set of the updated configuration parameters for verification. If only one set of updated configuration parameters is provided from the predictive system 214, the user selects the sole set of updated configuration parameters.

At 314, the selected set of updated configuration parameters are installed on the elevator controller 115.

At 316, the conveyance system 101 is operated in a trial run to verify that the selected set of updated configuration parameters have addressed the problem reported by the user. If the trial run is not successful (e.g., the problem is not resolved) flow may return to 314 where the user can select, through the user device 202, a second set of updated configuration parameters for verification.

The number of returns from 316 to 314 (e.g., the number of sets of updated configuration parameters attempted) may be limited to by an upper limit. For example, if four sets of updated configuration parameters are attempted and none resolve the problem, the process may end. At this point the user can submit a revised problem description to the predictive system 214. Further, the predictive system 214 can use the inability to resolve the problem as data for adaptive learning and updating model(s) used by the predictive system 214.

If, at 316, the trial run of the conveyance system 101 is successful (e.g., the problem is resolved), flow proceeds to 318 where the selected set of updated configuration parameters are saved in the controller 115.

At 320, the user can provide feedback, through the user device 202, to the predictive system 214. The feedback can be positive or negative and used by the predictive system 214 to improve problem resolution modeling.

At 322, the predictive system 214 may implement adaptive learning based on the feedback provided at 320. In this way, the predictive system 214 learns from problem resolution outcomes, improving accuracy and predictions over time.

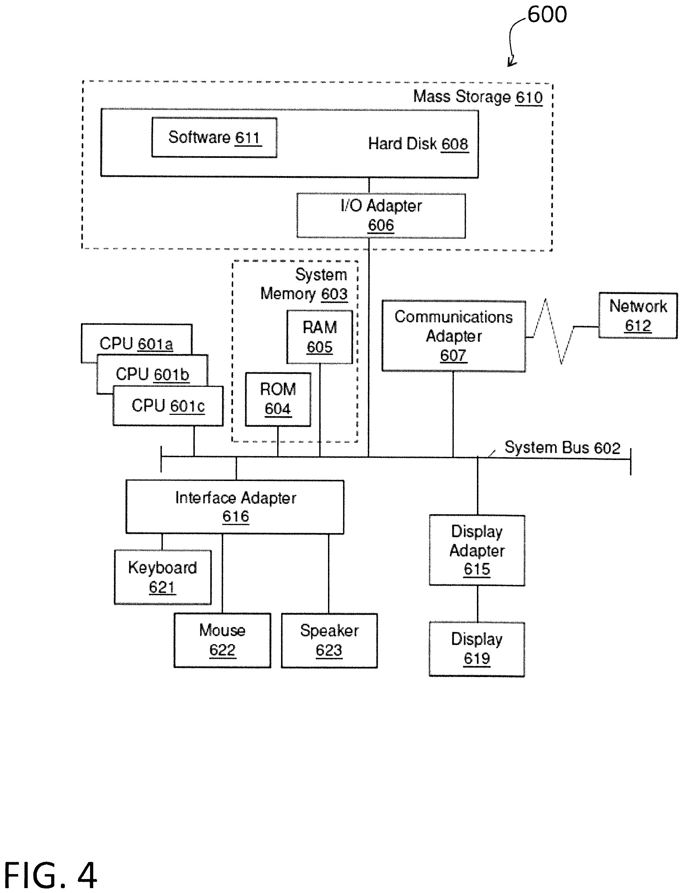

Turning now to FIG. 4, a computer system 600 is generally shown in accordance with an embodiment. The computer system 600 may be used to implement the predictive system 214. The computer system 600 can be an electronic, computer framework comprising and/or employing any number and combination of computing devices and networks utilizing various communication technologies, as described herein. The computer system 600 can be easily scalable, extensible, and modular, with the ability to change to different services or reconfigure some features independently of others. The computer system 600 may be, for example, a server, desktop computer, laptop computer, tablet computer, or smartphone. In some examples, computer system 600 may be a cloud computing node. Computer system 600 may be described in the general context of computer system executable instructions, such as program modules, being executed by a computer system. Generally, program modules may include routines, programs, objects, components, logic, data structures, and so on that perform particular tasks or implement particular abstract data types. Computer system 600 may be practiced in distributed cloud computing environments where tasks are performed by remote processing devices that are linked through a communications network. In a distributed cloud computing environment, program modules may be located in both local and remote computer system storage media, including memory storage devices.

As shown in FIG. 4, the computer system 600 has one or more central processing units (CPU(s)) 601a, 601b, 601c, etc. (collectively or generically referred to as processor(s) 601). The processors 601 can be a single-core processor, multi-core processor, computing cluster, or any number of other configurations. The processors 601, also referred to as processing circuits, are coupled via a system bus 602 to system memory 603 and various other components. The system memory 603 can include a read only memory (ROM) 604 and a random access memory (RAM) 605. The ROM 604 is coupled to the system bus 602 and may include a basic input/output system (BIOS), which controls certain basic functions of the computer system 600. The RAM is read-write memory coupled to the system bus 602 for use by the processors 601. The system memory 603 provides temporary memory space for operations of said instructions during operation. The system memory 603 can include random access memory (RAM), read only memory, flash memory, or any other suitable memory systems.

The computer system 600 comprises an input/output (I/O) adapter 606 and a communications adapter 607 coupled to the system bus 602. The I/O adapter 606 may be a small computer system interface (SCSI) adapter that communicates with a hard disk 608 and/or any other similar component. The I/O adapter 606 and the hard disk 608 are collectively referred to herein as a mass storage 610.

Software 611 for execution on the computer system 600 may be stored in the mass storage 610. The mass storage 610 is an example of a tangible storage medium readable by the processors 601, where the software 611 is stored as instructions for execution by the processors 601 to cause the computer system 600 to operate, such as is described hereinbelow with respect to the various Figures. Examples of computer program product and the execution of such instruction is discussed herein in more detail. The communications adapter 607 interconnects the system bus 602 with a network 612, which may be an outside network, enabling the computer system 600 to communicate with other such systems. In one embodiment, a portion of the system memory 603 and the mass storage 610 collectively store an operating system, which may be any appropriate operating system, such as the z/OS or AIX operating system from IBM Corporation, to coordinate the functions of the various components shown in FIG. 4.

Additional input/output devices are shown as connected to the system bus 602 via a display adapter 615 and an interface adapter 616. In one embodiment, the adapters 606, 607, 615, and 616 may be connected to one or more I/O buses that are connected to the system bus 602 via an intermediate bus bridge (not shown). A display 619 (e.g., a screen or a display monitor) is connected to the system bus 602 by a display adapter 615, which may include a graphics controller to improve the performance of graphics-intensive applications and a video controller. A keyboard 621, a mouse 622, a speaker 623, etc. can be interconnected to the system bus 602 via the interface adapter 616, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI). Thus, as configured in FIG. 4, the computer system 600 includes processing capability in the form of the processors 601, and, storage capability including the system memory 603 and the mass storage 610, input means such as the keyboard 621 and the mouse 622, and output capability including the speaker 623 and the display 619.

In some embodiments, the communications adapter 607 can transmit data using any suitable interface or protocol, such as the internet small computer system interface, among others. The network 612 may be a cellular network, a radio network, a wide area network (WAN), a local area network (LAN), or the Internet, among others. An external computing device may connect to the computer system 600 through the network 612. In some examples, an external computing device may be an external web server or a cloud computing node.

It is to be understood that the block diagram of FIG. 4 is not intended to indicate that the computer system 600 is to include all of the components shown in FIG. 4. Rather, the computer system 600 can include any appropriate fewer or additional components not illustrated in FIG. 4 (e.g., additional memory components, embedded controllers, modules, additional network interfaces, etc.). Further, the embodiments described herein with respect to computer system 600 may be implemented with any appropriate logic, wherein the logic, as referred to herein, can include any suitable hardware (e.g., a processor, an embedded controller, or an application-specific integrated circuit, among others), software (e.g., an application, among others), firmware, or any suitable combination of hardware, software, and firmware, in various embodiments.

As described above, embodiments can be in the form of processor-implemented processes and devices for practicing those processes, such as a processor in the predictive system 214. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of providing assisted problem resolution of a conveyance system, the method comprising:
receiving, at a predictive system, a problem description of a problem at the conveyance system and current configuration parameters of the conveyance system;
at the predictive system, determining at least one set of updated configuration parameters to address the problem; and
sending, from the predictive system to a user device, a response including the at least one set of updated configuration parameters.

2. The method of claim 1, further comprising training the predictive system using one or more of engineering specifications, service records and customer complaints.

3. The method of claim 1 or 2, wherein the response includes an impact analysis of the at least one set of updated configuration parameters on the conveyance system.

4. The method of any of claims 1 to 3, wherein the response includes one or more reasons for the problem.

5. The method of any of claims 1 to 4, further comprising operating the conveyance system in a trial run using the at least one set of updated configuration parameters.

6. The method of claim 5, further comprising saving the at least one set of updated configuration parameters when the trial run indicates successful resolution of the problem.

7. The method of claim 5 or 6, further comprising providing feedback to the predictive system after the trial run.

8. The method of claim 7, further comprising the predictive system performing adaptive learning based on the feedback.

9. The method of any of claims 1 to 8, wherein:
the at least one set of updated configuration parameters includes a plurality of sets of updated configuration parameters, the method further comprising:
selecting one of the plurality of sets of updated configuration parameters as a selected set of updated configuration parameters;
operating the conveyance system in a trial run using the selected set of updated configuration parameters; and
saving the selected set of updated configuration parameters when the trial run indicates successful resolution of the problem.

10. The method of any of claims 1 to 9, wherein the conveyance system is one of an elevator, escalator and moving walkway.

11. A system for providing assisted problem resolution of a conveyance system, particularly of one of an elevator, escalator and moving walkway, the system comprising:
a predictive system in communication with a user device over a network, the predictive system configured to perform operations including:
receiving, at the predictive system, a problem description of a problem at the conveyance system and current configuration parameters of the conveyance system;
at the predictive system, determining at least one set of updated configuration parameters to address the problem; and
sending, from the predictive system to a user device, a response including the at least one set of updated configuration parameters.

12. The system of claim 11, wherein the operations further include training the predictive system using one or more of engineering specifications, service records and customer complaints.

13. The system of claim 11 or 12, wherein the response includes an impact analysis of the at least one set of updated configuration parameters on the conveyance system; and/or
wherein the response includes one or more reasons for the problem.

14. The system of any of claims 11 to 13, wherein the conveyance system is operated in a trial run using the at least one set of updated configuration parameters;
wherein particularly the operations further include receiving, at the predictive system, feedback after the trial run; and/or
wherein particularly the operations further include the predictive system performing adaptive learning based on the feedback.

15. A computer program product embodied on a non-transitory computer-readable storage medium, the computer program product including instructions for causing a processor to implement a process of providing assisted problem resolution of a conveyance system, the process comprising the method of any of claims 1 to 10.
